# EUROPEAN PATENT SPECIFICATION

(11) **EP 1 331 691 B1**
(45) Date of publication and mention of the grant of the patent: **10.11.2004**
(21) Application number: 02002103.6
(22) Date of filing: 28.01.2002
(51) Int. Cl.: H01Q 1/24, H04B 1/38, H01Q 19/10

(54) **Mobile terminal with grounded radiation shielding frame**
Mobilfunkgerät mit geerdetem Abschirmungsrahmen
Terminal mobile avec écran de blindage mis à la masse

(43) Date of publication of application: 30.07.2003
(73) Proprietor: Sony International (Europe) GmbH, 10785 Berlin (DE)
(72) Inventor: Schweikle, Andreas, 85609 Aschheim-Dornach (DE); Brandstetter, Robert, 85609 Aschheim-Dornach (DE)
(74) Representative: Körber, Martin, Dipl.-Phys.

(56) References cited:
- EP-A- 0 878 863
- WO-A-00/45461
- WO-A-98/01919
- PATENT ABSTRACTS OF JAPAN vol. 1997, no. 02, 28 February 1997 (1997-02-28) & JP 08 265026 A (CASIO COMPUT CO LTD), 11 October 1996 (1996-10-11)
- PATENT ABSTRACTS OF JAPAN vol. 2000, no. 20, 10 July 2001 (2001-07-10) & JP 2001 077611 A (TDK CORP), 23 March 2001 (2001-03-23)
- PATENT ABSTRACTS OF JAPAN vol. 1999, no. 10, 31 August 1999 (1999-08-31) & JP 11 136156 A (TDK CORP), 21 May 1999 (1999-05-21)
- PATENT ABSTRACTS OF JAPAN vol. 1997, no. 11, 28 November 1997 (1997-11-28) & JP 09 181637 A (KOKUSAI ELECTRIC CO LTD), 11 July 1997 (1997-07-11)
- PATENT ABSTRACTS OF JAPAN vol. 1999, no. 12, 29 October 1999 (1999-10-29) & JP 11 187096 A (KYOCERA CORP), 9 July 1999 (1999-07-09)

## Description

The present invention relates to a mobile terminal for a wireless communication system with a radiation shielding frame being grounded to a printed circuit board of the terminal.

Mobile terminals for wireless communication systems, such as cell phones, personal digital assistants with integrated telephone functionality and so on are usually held in close contact to a users head in the communication mode. The head and particularly the brain are then directly exposed to electromagnetic radiation emitted from the antenna of the mobile terminal during the transmission of signals in the wireless communication system. The energy of the electromagnetic radiation absorbed in the brain raises the average temperature of the brain. In order to avoid possible health damages, legislators have set limits for a permissible radiation exposure. Manufacturers of mobile terminals are thus forced to build the mobile terminals in a way that a users head is exposed to as little radiation as possible.

Various measures have been taken to ensure that the antenna of a mobile terminal held to a user's head radiates as little radiation as possible towards the head. For example, US 5,335,366 proposes a radiation shielding means for a radio transmitting device, whereby a radiation shield is disposed between a radiation component and the user in order to prevent unwanted exposure of the user to radiation emanating from the radiation component. Said radiation shield absorbs, blocks and/or reflects electromagnetic wave radiation. A further way of shielding is disclosed in JP 2001077611.

The object of the present invention is to provide a mobile terminal for a wireless communication system comprising an improved radiation shielding means of a simple construction, which can be assembled in an easy but reliable way.

The above object is achieved by a mobile terminal for a wireless communication system according to claim 1. The mobile terminal according to the present invention comprises an antenna means for transmitting and receiving signals in a wireless communication system, said antenna means being located on an upper back side of a printed circuit board of the mobile terminal, display means held in a holding means located on an upper front side of the printed circuit board, and a radiation shielding frame arranged on the holding means and framing the display means, said radiation shielding frame consisting of electrically conducting material and being grounded to said printed circuit board in order to shield a user from radiation radiated from said antenna means. The radiation shielding frame is grounded to the printed circuit board by means of a flexible connection element projecting from the radiation shielding frame and is pressed against a ground contact area of the printed circuit board by a counter pressure element of the holding means.

The front side of the printed circuit board is the side of the mobile terminal which comprises a display, a key-pad, a microphone, a loud speaker and so on. The back side of the printed circuit board in the side opposite to the front side, i.e. the side of the mobile terminal which is usually covered by the hand of a user holding the mobile terminal in a normal operating position. The upper side of the printed circuit board refers to the side of the mobile terminal which is pointing upwards in a normal operating position. The lower side of the mobile terminal is the side which is pointing downwards in a normal operating position. The normal operating position of a mobile terminal is the position in which the mobile terminal is held to a user's ear in an upright position.

The radiation shielding frame and the holding means according to the present invention provide a simple but very effective way of shielding radiation radiated from the antenna means from a user's head. Particularly, the flexible connection element in corporation with the counter pressure element of the holding means provide a simple possibility of assembling the radition shielding frame and the holding means in a very reliable way so that the contact to the ground contact area and the grounding of the radiation shielding frame is ensured. Particularly, the pressing of the flexible connection element against the ground contact area by the counter pressure element ensures a stable and reliable connection. Since, on the other hand, the connection element is flexible, a simple and easy assembly is guaranteed.

Advantageously, the counter pressure element comprises a pressure area for holding the flexible connection element down towards the ground contact area. The pressure area hereby ensures that the flexible connection element and the counter pressure element can be easily and reliably assembled even if the different elements show manufacturing tolerances or the like.

Further advantageously, the flexible connection element is biased away from the ground contact area and urged from the counter pressure element towards said ground contact area so that a stable contact is provided. The bias of the flexible connection element ensures a good pressure contact with a counter pressure element so that once the radiation shielding frame, the holding means and the printed circuit board are assembled, a reliable connection to the ground contact area is established even if the mobile terminal is moved around or accidentally drops to the floor or the like. Particularly, this kind of assembly is resistant against mechanical shocks. Advantageously, the flexible connection element is formed as a plate spring with a contact part extending towards the ground contact area. A plate spring is advantageous since it can be easily formed as an integral part of the radiation shielding frame and can be easily bent into the bias. Advantageously, the contact part of the plate spring is part of a curved area being curved towards the ground contact area. Hereby, a reliable electrical contact is ensured. Particularly, when assembling the radiation shielding frame and the printed circuit board, the contact part of the plate spring performs a small relative movement to the ground contact area so that oxidation or dirt from the surface of the ground contact area is removed and a stable electrical connection is achieved.

Further advantageously, the flexible connection element extends across an opening in the holding means. The opening facilitates an assembly of the connection element and the counter pressure element. In this case, the opening is advantageously delimited by the counter pressure element on its one side. Further advantageously, the opening comprises a prevention means for preventing an operator to assemble the radiation shielding frame and the holding means in such a way that the flexible contact element does not contact the ground contact area. Advantageously, the preventing means is a wall element on said counter pressure element extending away from the printed circuit board. The provision of a preventing means is particularly advantageous since the radiation shielding frame and the holding means can only be assembled in such a way that the flexible connection element contacts the ground contact area of the printed circuit board. This feature is particularly important since operators usually assembling the elements are not aware of the importance of the electrical contact between the flexible connection element and the ground contact area. In this way, the radiation shielding frame, the holding means and the printed curcuit board can only be assembled in a single way, namely with the flexible connection element contacting the ground contact area.

The present invention is further explaneed in the following description in relation to the enclosed drawings, in which
Fig. 1 schematically shows the side view of a mobile terminal according to the present invention held to a user's head in order to explane the function of the radiation shielding frame, and
Fig. 2 shows a perspective view of a printed circuit board with a holding means and a radiation shielding frame with a flexible connection element contacting a ground contact area according to the present invention.

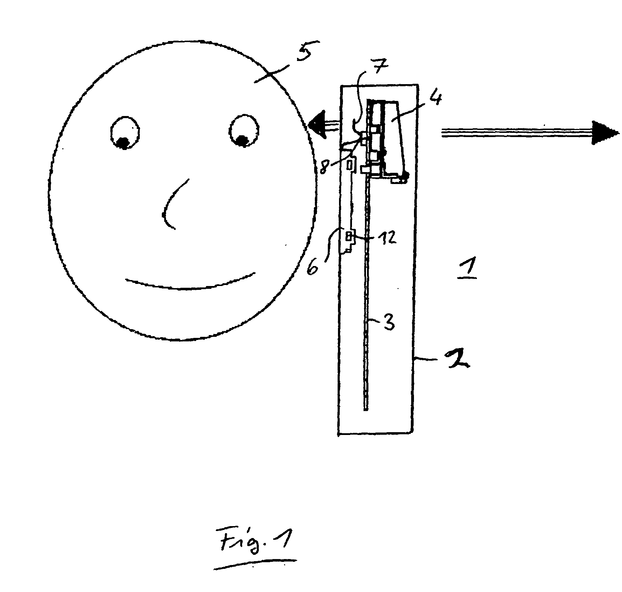

Fig. 1 shows schematically a mobile terminal 1, e.g. a cellphone or the like, for a wireless communication system, such as the GSM or UMTS system. The mobile terminal 1 comprises a printed circuit board or printed wiring board 3, on which essentially all functional elements and devices of the mobile terminal 1 are mounted. Fig. 1, however, only shows elements essential for the understanding of the radiation shielding mechanism. Particularly, on an upper back side of the printed circuit board 3, an antenna 4 is mounted. The antenna 4 is an internal antenna, e.g. is covered by a casing 2 of the mobile terminal 1. Alternatively, the antenna 4 can extend partially or completely away from the casing 2.

The electromagnetic radiation radiated from the antenna 4 is visualised by arrows in Fig. 1. The larger part of the radiation is directed away from the upper back side of the mobile terminal 1, i.e. away from a user's head. However, a part of the radiation radiates through the mobile terminal 1 towards the user's head.

Although generally the main part of the radiation in a mobile terminal 1 of a wireless communication system is radiated from the antenna, also the antenna feed lines and the RF-transceiver components radiate electromagnetic waves. However, since the antenna feed lines and RF-transceiver components are usually located close to the antenna 4, the radiation characteristics and the shielding mechanism for these components are the same as for the antenna 4. The exposure of a user to electromagnetic radiation emanated from radio equipment is generally characterised by the specific absorption rate (SAR) which is a measure for the rate of electromagnetic energy absorbed or dissipated in a mass of dielectric materials, such as biological tissues. Usually, SAR is expressed in watt per kilogramm (W/kg) or in milliwatt per kilogramm (mW/kg). With the biological absorption conditions of a user given, the SAR can be used as a synonym for the rate of emanated radiation energy absorbed in a user's tissue, such as the brain.

It is known, that the SAR-distribution in a user's body is strongly correlated with the distribution of the magnetic field on the printed circuit board or printed wiring board 4 of a mobile terminal 1 forming the source for the radiation. The distribution of the magnetic field is quite essentially influenced by ground return currents from the antenna and the antenna feeds, respetively, to the various grounds on the printed circuit board 4. These ground return currents are distributed over the entire printed circuit board 4. Modifying the return current distribution on the printed circuit board 4 therefore modifies the magnetic field distribution of the emanated RF-radiation and thus the SAR in a user's tissue. Modifiying the return current distribution on the printed circuit board 4 therefore provides a very effective means for suppressing a user's exposure to electromagnetic radiation emanated from elements of the mobile terminal 1.

The current distribution on the printed circuit board 3 is modified by grounding one or more electrically conductive components of the mobile terminal 1 in different points. According to the present invention, a radiation shielding frame 6 framing a display (not shown in Fig. 1) on the upper front side of the casing 2 of the mobile 1 is grounded via a flexible connection element 7 to a ground contact area 8 of the printed circuit board 3. The radiation shielding frame 6 is electrically conductive, i.e. is made from an electrically conductive material with a specific resistance of about or smaller than 10⁻² Ωcm. Suitable materials are for example metal, metal oxides, conductive polymers or the like. The radiation shielding frame 6 influences the return current distribution on the printed circuit board 3 in a way that radiation emanated from the antenna 4 in the direction of the user's head 5 is significantly suppressed or lowered. Besides influencing the return current distribution on the printed circuit board 3 the radiation shielding frame 6 also blocks electromagnetic radiation emanated from the antenna 4 by absorption and/or reflection. Further, the radiation shielding frame 6 also works as an electrostatic discharge frame for protecting the display.

It has to be noted that the terms "ground potential", "ground", "grounded" and the like used in the present specification always refer to an RF-ground potential of the mobile terminal, even if the RF-ground is not equal to a DC-ground potential.

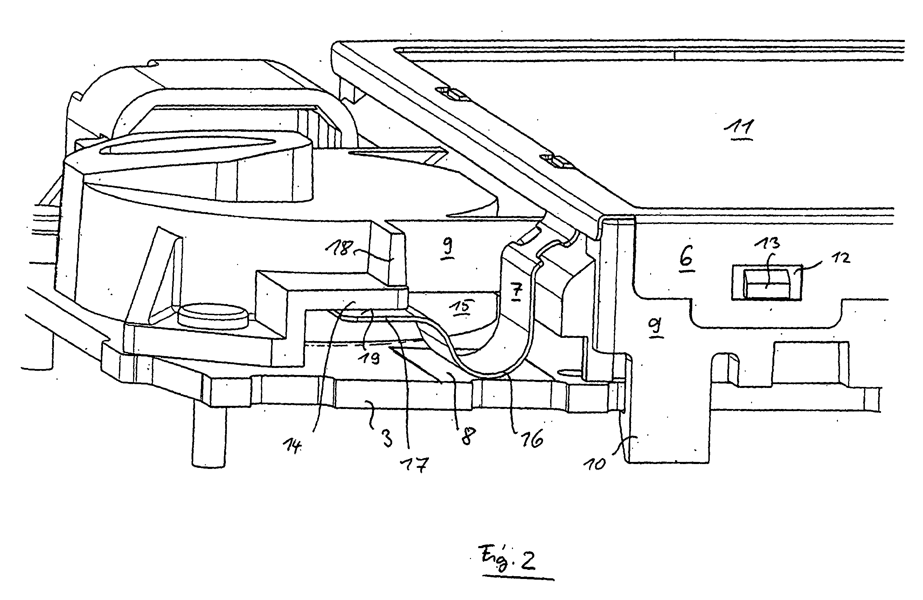

Fig. 2 shows a perspective view of parts of the radiation shielding frame 6, holding means 9 and the printed circuit board 3 for explaneing the present invention.

The radiation shielding frame 6 is arranged on a holding means 9 holding a display 11. The display 11 is for example a liquid crystal display or any other type of display suitable for the use in the mobile terminal 1 for a wireless communication system. The holding means 9 is essentially a plastic casing into which the display 11 is snapped in, glued in or the like. The holding means 9 comprises clips 10 for connecting the holding means 9 to the printed circuit board or printed wiring board 3 on an upper front side thereof. Additionally to the casing for holding the display 11, the holding means 9 comprises structures for holding and/or protecting additional elements on the printed circuit board 3. These structures are shown on the left side in Fig. 2. The casing and additional structures of the holding means 9 are formed in one piece made of a plastics material.

The radiation shielding frame 6 is framing the display 11 and sits on the part of the holding means 9 encircling the display 11. Hereby, the radiation shielding frame 6 essentially has a shape corresponding to the outline of the display 11. In the example shown in Fig. 2, the display 11 has a rectangular shape and so does the radiation shielding frame 6. Further, the radiation shielding frame 6 comprises side walls extending downwards in the direction to the printed circuit board 3. Hereby, the left and right side walls (left and right refer to the left and right directions when looking onto the front side of the mobile terminal 1) comprise openings 12, by means of which the radiation shielding frame 6 is snapped onto and held by corresponding projections 13 of the holding means 9. In the example shown, the radiation shielding frame 6 is made from thin electrically conductive metal.

The radiation shielding frame 6 comprises a plate spring 7 extending from its upper rim downwards to a ground contact area 8 of the printed circuit board 3 with a curved part 16 which terminates in a pressured part 17 extending essentially parallel to the plane of the printed circuit board 3.

In Fig. 2, the radiation shielding frame 6, the holding means 9 and the printed circuit board 3 are shown in an assembled condition, in which the plate spring 7 of the radiation shielding frame 6 is pressed against the ground contact area 8 of the printed circuit board 3 by a counter pressure element 14 of the holding means 9. The plate spring 7 is unitary with the radiation shielding means 6 and consists of a small strip of thin metal comprising to curved part 16 and the plane pressured part 17. The plate spring 7 is flexible and is in the assembled condition shown in Fig. 2 bent downwards in the direction to the printed circuit board 3 by the counter pressure element 14. The counter pressure element 14 is basically formed by a plane, plate-like wall being an integral part of the holding means 9. The counter pressure element 14 hereby extends essentially parallel to the plane of the printed circuit board 3 leaving a small space for the pressured part 17 of the plate spring 7. The counter pressure element 14 hereby comprises a plane pressure area 19, which is the plane facing the printed circuit board 3 and which contacts and pressures the pressured part 17. Between the counter pressure element 14 and the part of the holding means 9 forming the casing for the display 11, an opening 15 is formed, across or through which the plate spring 7 extends.

When assembling the radiation shielding frame 6, the holding means 9 and the printed circuit board 3, the holding means 9 is first mounted onto the printed circuit board 3. Thereafter, the display 11 is inserted into the holding means 9. Afterwards, the radiation shielding frame 6 is clipped onto the holding means 9, whereby the plate spring 7 is first inserted into the opening 15 with the pressured part 17 being inserted into the space between the printed circuit board 3 and the counter pressure element 14. Hereby, when fixing the radiation shielding frame 6 onto the holding means 9, plate spring 7 is slightly bent so that the pressure area 19 of the unflexible and not movable counter pressure element 14 counterpressures the pressure exerted from the pressured part 19 of the plate spring 7. Thus, the plate spring 7 is biased away from the printed circuit board 3 in the assembled condition.

Hereby, when inserting the plate spring 7 into the opening 15, the curved part 16 of the plate spring 7, when contacting the ground contact area 8, is moved along the round contact area 8 as a consequence of the bending of the plate spring 7. Hereby, the contact area between the curved part 16 and the ground contact area 8 is cleaned and a good electrical connection is ensured. In the assembled state as shown in Fig. 2, the plate spring 7 is biased away from the printed circuit board 3, i.e. the pressured part 17 is pressed against the pressure area 19 and the curved part 16 is pressed against the ground contact area 8 so that a very reliable electrical connection is established.

It has to be noted that the plate spring 7 may have any other shape suitable to establish the connection to the ground contact area 8 in accordance with the present invention. For example, the spring plate 7 may have a curved shape over its entire length or may comprise only flat or plane parts, whereby an edge between two flat parts forms the contact area to the ground contact area 8. Also, the counter pressure element 14 may have any shape suitable to exert a counter pressure against the spring plate 7 according to the present invention.

The ground contact area 8 of the printed circuit board 3 is connected to an RF-ground potential terminal of the mobile terminal 1.

In order to prevent a wrong assembly of the radiation shielding frame 6, the holding means 9 and the printed circuit board 3, the counter pressure element 14 comprises a wall part 18 extending upwardly, i.e. away from the printed circuit board 3 on the side of the counter pressure element 14 bordering the opening 15. The wall part 18 prevents an operator assembling the radiation shielding frame 6, the holding means 9 and the printed circuit board 3 to fix the radiation shielding frame 6 on the holding means 9 without inserting the plate spring 7 into the opening 15. The wall part 18 is formed in a way that when the radiation shielding frame 6 is set onto the holding means 9 without inserting the place spring 7 into the opening 15, the pressured part 17 of the plate spring 7 abuts the wall part 18 before the frame part of the radiation shielding frame 6 can be fixed on the holding means 9. The counter pressure exerted by the plate spring 7 signals the operator that an assembly attempt is not correct. Depending on the hight of the wall part 18 and the bias force of the plate spring 7, the operator might even be completely prevented from wrongly assembling the radiation shielding fram 6 on the holding means 9.

## Claims

1. Mobile terminal (1) for a wireless communication system, with
antenna means (4) for transmitting and receiving signals in the wireless communication system, said antenna means (4) being located on an upper back side of a printed circuit board (3) of the mobile terminal (1),
display means (11) held in a holding means (9) located on an upper front side on the printed circuit board (3) and **characterised by**
a radiation shielding frame (6) arranged on the holding means (9) and framing the display means (11), said radiation shielding frame (6) consisting of electrically conducting material and being grounded to said printed circuit board (3) in order to shield a user from radiation radiated from said antenna means (4),
said radiation shielding frame (6) being grounded to said printed circuit board (3) by means of a flexible connection element (7) projecting from said radiation shielding frame (6) and being pressed against a ground contact area (8) of said printed circuit board by a counter pressure element (14) of said holding means (9).

2. Mobile terminal (1) for a wireless communication system according to claim 1,
**characterized in,**
**that** said counter pressure element (14) comprises a pressure area (19) for holding said flexible connection element (7) down towards said ground contact area (8).

3. Mobile terminal (1) for a wireless communication system according to claim 1 or 2,
**characterized in,**
**that** said flexible connection element (7) is biased away from said ground contact area (8) and urged from said counter pressure element (14) towards said ground contact area (8) so that a stable contact is ensured.

4. Mobile terminal (1) for a wireless communication system according to claim 3,
**characterized in,**
**that** said flexible connection element (7) is formed as a plate spring with a contact part (16) extending towards said ground contact area (8).

5. Mobile terminal (1) for a wireless communication system according to claim 4,
**characterized in,**
**that** said contact part (16) of said plate spring is part of a curved area being curved towards said ground contact area (8).

6. Mobile terminal (1) for a wireless communications system according to one of the claims 1 to 5,
**characterized in,**
**that** said flexible connection element (7) extends across an opening (15) in said holding means (9).

7. Mobile terminal (1) for a wireless communication system according to claim 6,
**characterized in,**
**that** said opening (15) is delimited by said counter pressure element (14) on its one side.

8. Mobile terminal (1) for a wireless communication system according to claim 7,
**characterized in,**
**that** said opening (15) comprises a prevention means (18) for preventing an operator to assemble the radiation shielding frame (6) and the holding means (9) in such a way that the flexible contact element (7) does not contact the ground contact area (8).

9. Mobile terminal (1) for a wireless communication system according to claim 8,
**characterized in,**
**that** said preventing means (18) is a wall element on said counter pressure element (14) extending away from said printed circuit board (3).

## Patentansprüche

1. Mobilfunkgerät (1) für ein Drahtloskommunikationssystem, mit
einer Antenneneinrichtung (4) zum Übertragen und zum Empfangen von Signalen im Drahtloskommunikationssystem, wobei die Antenneneinrichtung (4) auf einer oberen hinteren Seite einer gedruckten Schaltungsplatte (3) des Mobilfunkgeräts (1) angeordnet ist,
einer Anzeigeeinrichtung (11), die in einer Halteeinrichtung (9) gehalten wird, die auf einer oberen Vorderseite der gedruckten Schaltungsplatte (3) angeordnet ist, **gekennzeichnet durch**
einen Strahlungsabschirmungsrahmen (6), der auf der Halteeinrichtung (9) angeordnet ist und die Anzeigeeinrichtung (11) umrahmt, wobei der Strahlungsabschirmungsrahmen (6) aus elektrisch-leitfähigem Material besteht und mit der gedruckten Schaltungsplatte (3) geerdet ist, um einen Benutzer gegenüber Strahlung, die von der Antenneneinrichtung (4) abgestrahlt wird, abzuschirmen,
wobei der Strahlungsabschirmungsrahmen (6) mit der gedruckten Schaltungsplatte (3) **durch** ein flexibles Verbindungselement (7) geerdet ist, welches sich vom Strahlungsabschirmungsrahmen (6) erstreckt und gegen eine Erdkontaktfläche (8) der gedruckten Schaltungsplatte **durch** ein Gegendruckelement (14) der Halteeinrichtung (9) gedrückt wird.

2. Mobilfunkgerät (I) für ein Drahtloskommunikationssystem nach Anspruch 1,
**dadurch gekennzeichnet, dass**
das Gegendruckelement (14) einen Druckbereich (19) zum Halten des flexiblen Verbindungselements (7) nach unten in Richtung auf die Erdkontaktfläche (8) aufweist.

3. Mobilfunkgerät (1) für ein Drahtloskommunikationssystem nach Anspruch 1 oder 2,
**dadurch gekennzeichnet, dass**
das flexible Verbindungselement (7) weg von der Erdkontaktfläche (8) vorgespannt ist und vom Gegendruckelement (14) in Richtung auf die Erdkontaktfläche (8) gedrückt wird, so dass ein stabiler Kontakt sichergestellt ist.

4. Mobilfunkgerät (1) für ein Drahtloskommunikationssystem nach Anspruch 3,
**dadurch gekennzeichnet, dass**
das flexible Verbindungselement (7) als eine Blattfeder ausgebildet ist, wobei sich ein Kontaktteil (16) in Richtung auf die Erdkontaktfläche (8) erstreckt.

5. Mobilfunkgerät (1) für ein Drahtloskommunikationssystem nach Anspruch 4,
**dadurch gekennzeichnet, dass**
das Kontaktteil (16) der Blattfeder Teil eines gekrümmten Bereichs ist, der in Richtung auf die Erdkontaktfläche (8) gekrümmt ist.

6. Mobilfunkgerät (1) für ein Drahtloskommunikationssystem nach einem der Ansprüche 1 bis 5,
**dadurch gekennzeichnet, dass**
das flexible Verbindungselement (7) sich über eine Öffnung (15) in der Halteeinrichtung (9) erstreckt.

7. Mobilfunkgerät (1) für ein Drahtloskommunikationssystem nach Anspruch 6,
**dadurch gekennzeichnet, dass**
die Öffnung (15) durch das Gegendruckelement (14) auf ihrer einen Seite begrenzt ist.

8. Mobilfunkgerät (1) für ein Drahtloskommunikationssystem nach Anspruch 7,
**dadurch gekennzeichnet, dass**
die Öffnung (15) eine Vorbeugungseinrichtung (18) aufweist, um zu verhindern, dass ein Arbeiter den Strahlungsabschirmungsrahmen (6) und die Halteeinrichtung (9) in einer Weise montiert, dass das flexible Kontaktelement (7) die Erdkontaktfläche (8) nicht kontaktiert.

9. Mobilfunkgerät (1) für ein Drahtloskommunikationssystem nach Anspruch 8,
**dadurch gekennzeichnet; dass**
die Vorbeugungseinrichtung (18) ein Wandelement auf dem Gegendruckelement (14) ist, welches sich von der gedruckten Schaltungsplatte (3) weg erstreckt.

## Revendications

1. Terminal mobile (1) pour un système de communication sans fil, comportant
des moyens d'antenne (4) pour émettre et recevoir des signaux dans le système de communication sans fil, lesdits moyens d'antenne (4) étant situés sur un côté arrière supérieur d'une carte à circuits imprimés (3) du terminal mobile (1),
des moyens d'affichage (11) retenu dans des moyens de retenue (9) situés sur un côté avant supérieur de la carte à circuits imprimés (3), et
**caractérisé par**
un cadre (6) de protection contre le rayonnement, disposé sur les moyens de retenue (9) et encadrant les moyens d'affichage (11), ledit cadre (6) de protection contre le rayonnement étant réalisé en un matériau électriquement conducteur et étant fixé, selon une connexion de masse, à ladite carte à circuits imprimés (3) de manière à protéger un utilisateur vis-à-vis d'un rayonnement provenant desdits moyens d'antenne (4),
ledit cadre (6) de protection contre le rayonnement étant connecté, selon une connexion de masse, au panneau de circuits imprimés (3) au moyen d'un élément de connexion flexible (7) qui fait saillie à partir dudit cadre (6) de protection contre le rayonnement et est repoussé contre une zone de contact de masse (8) de ladite carte à circuits imprimés par un élément de contre-pression (14) desdits moyens de retenue (9).

2. Terminal mobile (1) pour un système de communication sans fil selon la revendication 1, **caractérisé en ce que** ledit élément de contre-pression (14) comprend une zone de pression (19) pour retenir ledit élément de connexion flexible (7) en direction de ladite zone de contact de masse (8).

3. Terminal mobile (1) pour un système de communication sans fil selon la revendication 1 ou 2, **caractérisé en ce**
**que** ledit élément de connexion flexible (7) est sollicité à partir de ladite zone de contact de masse (8) et est repoussé par ledit élément de contre-pression (14) vers ladite zone de contact de masse (8) de sorte qu'un contact stable est garanti.

4. Terminal mobile (1) pour un système de communication sans fil selon la revendication 3, **caractérisé en ce que** ledit élément de connexion flexible (7) est agencé sous la forme d'un ressort à lame comportant une partie de contact (16) s'étendant en direction de la zone de contact de masse (8).

5. Terminal mobile (1) pour un système de communication sans fil selon la revendication 4, **caractérisé en ce que** ladite partie de contact (16) dudit ressort à lame fait partie d'une zone courbe qui est courbée en direction de ladite zone de contact de masse (8).

6. Terminal mobile (1) pour un système de communication sans fil selon l'une des revendications 1 à 5, **caractérisé en ce**
**que** ledit élément de connexion flexible (7) s'étend en travers d'une ouverture (15) formée dans lesdits moyens de retenue (9).

7. Terminal mobile (1) pour un système de communication sans fil selon la revendication 6, **caractérisé en ce que** ladite ouverture (15) est délimitée par ledit élément de contre-pression (14) sur l'un de ses côtés.

8. Terminal mobile (1) pour un système de communication sans fil selon la revendication 7, **caractérisé en ce que** ladite ouverture (15) comprend des moyens de prévention (18) pour empêcher un opérateur d'assembler le cadre (6) de protection contre le rayonnement et les moyens de retenue (9) de manière que l'élément de contact flexible (7) ne touche pas la zone de contact de masse (8).

9. Terminal mobile (1) pour un système de communication sans fil selon la revendication 8, **caractérisé en ce que** lesdits moyens de prévention (18) sont constitués par un élément de paroi situé sur ledit élément de contre-pression (14) et qui s'étend à partir de ladite carte à circuits imprimés (3).
